# EUROPEAN PATENT APPLICATION

(11) **EP 0 671 587 A1**
(43) Date of publication of application: **13.09.1995**
(21) Application number: 93830546.3
(22) Date of filing: 31.12.1993
(51) Int. Cl.: F23G 1/00, F22B 31/04

(54) **Waste destructor combined with a second thermal source for the production of electric or mechanical energy**

(71) Applicant: CONSIT S.r.l., I-00195 Roma (IT)
(72) Inventor: Lacquaniti, Luigi, I-00192 Roma (IT); Liuzzo, Giuseppe, I-00192 Roma (IT); Palitto, Marcello, I-00168 Roma (IT)
(74) Representative: Fiammenghi, Carlo

(57) **Abstract**

Waste destructor, associated to a steam turbine cycle and combined with a second thermal source for heat regeneration and minimization of gaseous emissions, and for the production of electrical or mechanical energy. The destructor comprises an oven (2), an afterburning chamber (6) and a boiler (7) for heat regeneration comprising evaporation benches (11), an economizer (12), and a steam separator (13). The steam turbine cycle (14) comprises a condenser (15), a feed heater (16) of water feeded to said boiler (7) of the destructor, and also a heat exchanger (17; 17a) for superheating the steam. The heat exchanger (17; 17a) is independent, at least partially, from said boiler (7), as regards thermal exchange, and is feeded with hot non corrosive gases (18), produced by a source other than the destructor.

## Description

The present invention relates to a waste destructor (incineritor), associated to a steam turbine-cycle and combined with a second thermal source, for heat regeneration and minimization of gaseous emissions.

At the present state of the art, it is already known how to regenerate heat from the combustion products derived from waste, and how to transform such heat into mechanical and/or electric energy.

This is obtained by letting the hot flue gas derived from the combustion of waste pass through a boiler or steam generator; the steam produced by the boiler is then expanded in a turbine, generating mechanical energy, which may be partially or totally transformed into electric energy.

The efficiency of the heat transformation process into mechanical energy according to the above described arrangement depends highly on the properties of the steam produced by the thermal regeneration process. Under this point of view, the regeneration of heat from the flue gas produced by the combustion process, meets with technological limits, because it doesn't allow to produce steam at temperatures higher than 380 + 400° C. These limits are due to the presence in the flue gas of suspended waste particles with a low melting point, whose deposits on heat-exchange surfaces operating at temperatures higher than said melting point, may cause serious corrosion problems.

Because of the above mentioned problems, as known to those skilled in the art, the regeneration of mechanical or electric energy, from the combustion, does not exceed, usually, 15 + 24% of the thermal energy made available by the waste combustion. With reference to a solid city waste (SCW) characterized by a net heat value (NHV) equal to 2200 KCal/kg, one therefore obtains 380 + 610 kWh for every ton of incinerated SCW.

In the process involving the combustion of waste one gets into other difficulties which limit the quantity of heat regenerated from the flue gas, because in Italy the laws relating to the combustion of waste state in particular that the flue gas produced from waste combustion and flowing out of the combustion chamber, must subsequently pass through another device known as afterburning chamber, and flow out of the latter with a free oxygen content which is not less than 6% in volume.

The presence of the afterburning chamber substantially does not allow in practice to regenerate heat directly from the combustion chamber, therefore the temperature inside the combustion chamber must be limited by an excess of comburent air, thus producing a quantity of flue gas which is much greater. The greater amount of air introduced, has as a consequence, that for the same temperature of the flue gas flowing out of the heat regeneration section, more heat is lost from the flue gas flowing out of the heat regeneration section.

A main object of the present invention is to eliminate the disadvantages due to the above mentioned limitations, and in particular, to regenerate mechanical and/or electrical energy from the heat derived from the combustion of waste, with the maximum efficiency that can be obtained by the technology of steam turbine-cycles.

Another object of the present invention, not less important than the foregoing, is that of obtaining a maximum regeneration of mechanical and/or electric energy at the expense of waste and making use of another thermal source, in such a way as to reduce the overall quantity of flue gas discharged into the atmosphere.

According to what has been said above, the present invention provides a waste destructor associated to a steam turbine-cycle and combined with another thermal source, serving both for heat regeneration and for the minimization of gaseous emissions, and for the production of electrical or mechanical energy.

The waste destructor comprises an oven with a furnace having a combustion chamber to which comburent air is feeded from below the furnace, as primary air, secondary air being feeded from above the furnace, the destructor comprising also an afterburning chamber, a heat regeneration boiler including evaporation benches, an economizer, possibly a superheater and a steam separator; the steam turbine-cycle comprising respectively a steam condenser, at least a feed heater of the water feeded to the boiler, and said heat regeneration boiler of the waste destructor. The waste destructor is also characterized in that it comprises a second heat exchanger for superheating the steam, which is at least partially independent from said boiler as regards thermal exchange, said heat exchanger being feeded with non-corrosive hot gases produced by a second thermal source other than the waste destructor.

As a non-limitative example, said hot gases feeded to the heat exchanger for superheating the steam, which don't give rise to the troubles caused by the flue gas derived from the combustion of waste, may be gases derived from a production process of a factory of manufactured articles, as for example steel plants, glassworks, cement factories, etc., or they may be gases produced for the present purpose by means of a fuel burner, or gases discharged by a gas turbine.

Among the advantages obtained by the present invention, there is the increase of efficiency of energy production at the expense of a "renewable" source like solid city waste, and at the expense of thermal sources, generally due to other production processes, and which otherwise would not be used.

Other features and advantages of the present invention will be apparent from the following detailed description, making reference to the accompanying drawings, in which:
Fig. 1 is a schematic view of a steam turbine combined with a waste destructor according to a general embodiment of the present invention; and
Fig. 2 is a view similar to that of Fig. 1 of a steam turbine combined with a waste destructor according to a particular embodiment of the present invention.

In the figures similar reference numbers indicate the same or similar parts. Reference number 1 indicates a waste (SCW) feeding device, 2 indicates an oven comprising a furnace 3 with a combustion chamber feeded from below by means of a plant for feeding primary air 4, said combustion chamber being feeded from above by means of a plant for feeding secondary air 5; reference number 6 indicates an afterburning chamber, 7 a heat regeneration boiler from which the flue gas flows out towards block 8 indicating a depuration device.

Below the oven 2 and the afterburning chamber 6 there is a device 9 for removing the scum, whereas below the heat regeneration boiler there is a device 10 for removing the ashes.

In the heat regeneration boiler 7 there are shown the evaporation benches 11, 12 indicates an economizer, and 13 a steam separator. There is not shown a possible superheater in which a partial superheating of the steam generated in the boiler of the destructor may occur, through the flue gas of the destructor itself.

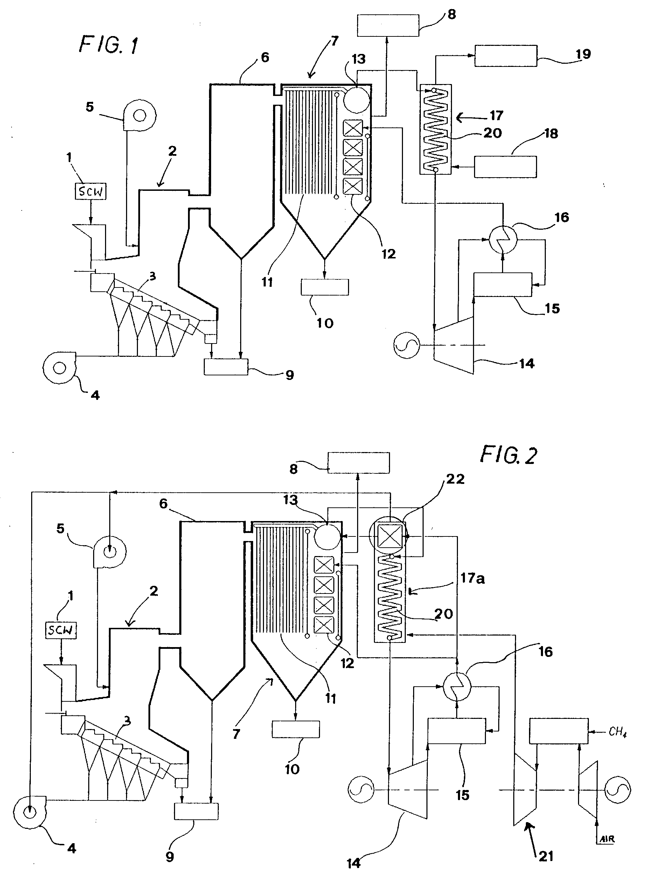

With reference in particular to Fig. 1, a turbine cycle comprises a steam turbine 14 combined with the destructor, and, in the correct order, a steam condenser 15, at least one feed heater 16 for heating water to be fed to the boiler, the heat regeneration boiler 7 of the destructor, and a heat exchanger 17 for superheating the steam.

According to the invention, the heat exchanger 17 is independent, at least partially, from the heat regeneration boiler 7, and is disposed downstream of it, being feeded for the thermal exchange, by hot gases 18, produced by a source other than the waste destructor (incinerator).

The hot heat-exchange gases are discharged in 19 from the heat-exchanger 17. The block 19 represents a series of already known treatements performed on said discharged gases.

The hot gases feeded to the heat exchanger 17 are gases which do not give rise to corrosion problems usually caused by the flue gas at high temperatures. By way of example, these hot gases are gases derived from a production process of a factory of manufactured articles, as a steel plant, glassworks, a cement factory, etc., or gases produced for the present purpose by means of a fuel burner, or, as shown in Fig. 2, gases discharged by a gas turbine.

It has been said above, that according to the invention the heat exchanger 17 is independent, at least partially, from the heat regeneration boiler 7, because it could also be feeded (partially) with the flue gases from the destructor or it could possibly be indirectly heated by them, provided that said corrosion phenomena do not appear.

With reference to Fig. 1, the part in which heat is regenerated, is in practice made up by a vaporization section, by a superheating section, and by a preheating section of the water to be fed to the boiler. The vaporization section is contained within the boiler 7, which uses the heat regenerated from the flue gas by means of the economizer 12 and the vaporization benches 11. The superheating section is made up by the exchanger 17 wherein the superheater 20 is located, which is feeded with the hot gases 18; the superheating section may also comprise a superheater located inside the boiler. The preheating section comprises the feed heater 16 which is feeded with heat obtained from the expanding steam of the steam turbine 14.

The steam produced in the boiler 7, after the preheating of the water inside the feed heater 16, is in a saturation condition, that is said steam has a temperature equal to the boiling temperature at the pressure existing inside the tubes of the evaporation benches 11 of the boiler. The saturated steam produced in this way is sent to the superheater 20 outside the boiler 7.

As a result of the present invention, the aforesaid limits of 380 + 400° C in the superheating of the steam, are not encountered, and on the contrary, the technological limits existing nowadays for this operation, of 500 + 700° C, may be reached by using in a combined manner the heat of the flue gas from the destructor and the heat of hot gases having a different origin.

The advantages which arise as regards the regenerated mechanical and/or electric energy are due to the higher temperature of the steam flowing into the steam turbine 14, and to the heat quantity provided by the steam of hot gases 18 used for superheating the steam.

For example, in order to evaluate quantitatively the improvement which may be obtained, one may consider the regenerated mechanical energy for every ton of burnt SCW, as reported in table 1, according to the prior art and according to the present invention, respectively, all the other parameters being the same.

**Table 1**

| Regenerated heat and energy produced for every ton of incinerated SCW | | |
|---|---|---|
| | Prior Art | Present invention |
| Heat from burnt SCW [kWh/t] | 2558 | 2558 |
| Heat generated from flue gases [kWh/t] | 2128 | 2128 |
| Heat from hot gases [kWh/t] | - | 615 |
| Total regenerated heat [kWh/t] | 2128 | 2743 |
| Energy produced [kWh/t] | 610 | 1000 |
| Efficiency [%] | 24 | 32 |

As can be seen in table 1, an increase of the regenerated heat, equal to 29%, produces an increase equal to 64% of the produced energy, because of the improved total efficiency of the thermodynamic cycle for the production of energy.

If the hot gases 18 used for the superheating of the steam have a free oxygen content which is sufficient to support the combustion of the waste in the incinerator, they may be used as comburent air, as shown in Fig. 2, which represents a particular embodiment of the present invention. In this embodiment, the hot gases which are feeded to the heat exchanger 17a, are the gases discharged by a gas turbine 21.

The heat exhanger 17a, in contrast to the exchanger 17, comprises not only a superheater 20, but also an economizer 22, through which passes part of the preheated water before reaching the boiler 7.

The gases flowing out of the heat exchanger 17a, are feeded, at least partially, to the oven 2 of the destructor (or incinerator) 1, so as to partially or totally replace the primary air 4 feeded below the furnace, and/or to partially or totally replace the secondary air, introduced above the furnace.

The temperature of the hot gases flowing out of the heat exchanger 17a, must be adjusted in such a way that the combustion temperature of the waste is maintained at the required value (which is today equal to 950° C inside the afterburning chamber), the flow rate of said hot gases being such as to allow the required superheating of all the steam generated in the boiler of the destructor.

In this way, the further (already mentioned) advantage is obtained, that the whole amount of flue gas discharged in the atmosphere is not increased.

As a non-limitative example, consider for instance the situation in which a ton of SCW is incinerated according to the prior art, and respectively, according to the present invention.

The values reported in the following table 2 are obtained according to a conventional combustion process, by associating to the combustion of a ton of SCW, the combustion of 159 kg of methane in the heater of a gas turbine having a high efficiency (32%), and, in the case of the present invention, according to Fig. 2, by using the same ratio methane/SCW.

**Table 2**

| | Prior Art | Present invention |
|---|---|---|
| Amount of methane used [kg] | 159 | 159 |
| Comburent air for SCW destructor [kg] | 7356 | - |
| Comburent air for gas turbine [kg] | 9616 | 9616 |
| Flue gas from destructor [kg] | 6453 | 10557 |
| Flue gas from gas turbine [kg] | 9775 | - |
| Total flue gas [kg] | 16228 | 10557 |
| Electric energy from steam turbine [kWh] | 610 | 910 |
| Electric energy from gas turbine [kWh] | 700 | 700 |
| Total electric energy produced [kWh] | 1310 | 1610 |

From the listed values one realizes that in the case of the embodiment of the present invention shown in Fig. 2, with respect to the prior art, it is possible to increase by 23% the electric energy produced and simultaneously decrease by 35% the amount of flue gas discharged in the atmosphere, thus obtaining noticeable advantages both economical and as regards the protection of the environment against pollution.

It must be stressed that the advantages obtained by using the combined arrangement of the present invention, will increase together with the increase of the calorific power of the waste to be incinerated, so that said advantages are most relevant in the case where solid city waste is disposed of, or in the case where RdF (Refuse derived Fuel) is burnt, whose net heat value (NHW) is usually between 3500 and 4500 kCal/kg.

As a non-limitative example, in the following table 3, there are listed the values, analogous to those indicated in table 2, for the case of the combustion of a ton (1 t) of RdF with a NHW equal to 4539 kCal/kg.

**Table 3**

| | Prior Art | Present invention |
|---|---|---|
| Methane used [kg] | 321,5 | 321,5 |
| Comburent air for RdF-incinerator [kg] | 16956 | - |
| Comburent air for gas turbine [kg] | 19430 | 19430 |
| Flue gas from incinerator [kg] | 17844 | 20640 |
| Flue gas from gas turbine [kg] | 19752 | - |
| Total flue gas [kg] | 37596 | 20640 |
| Electric energy from steam turbine [kWh] | 1687 | 2517 |
| Electric energy from gas turbine [kWh] | 1415 | 1415 |
| Total electric energy produced [kWh] | 3102 | 3932 |

In this case, the increase in the production of electric energy is equal to 27%, and the decrease in the quantity of discharged flue gas is equal to 45%.

It must be stressed furthermore, that the advantages illustrated above, have been evaluated with first approximation calculations.

For those skilled in the art, it will be possible to reach results which are even more favourable, by means of an optimization of the operational parameters.

## Claims

1. Waste destructor, associated to a steam turbine cycle and combined with a second thermal source, for the regeneration of heat and the minimization of gaseous emissions, and for the production of electrical or mechanical energy, the destructor comprising an oven (2) having a furnace (3) with a combustion chamber which is feeded with comburent air from below the furnace, said comburent air being primary air (4), secondary air (5) being feeded from above the furnace, the destructor comprising further an afterburning chamber (6), a boiler (7) for heat regeneration including evaporation benches (11), an economizer (12), a possible superheater and a steam separator (13); the steam turbine cycle comprising in succession a condenser (15), at least a feed heater (16) of water to be feeded to the boiler (7), and said heat regeneration boiler (7) of the destructor, the destructor being characterized in that it comprises a further heat exchanger (17, 17a) for superheating the steam, which is independent, at least partially, as regards heat exchange, from said boiler (7), and which is feeded with non-corrosive hot gases (18) produced by a thermal source different from the waste destructor.

2. Waste destructor according to claim 1, characterized in that said hot gases (18) feeded to said heat exchanger (17; 17a), for superheating the steam, are discharge gases of a production process.

3. Waste destructor according to claim 1, characterized in that said hot gases feeded to said heat exchanger (17; 17a) for superheating the steam, are gases which are produced for this purpose by means of a fuel burner.

4. Waste destructor according to claim 1, characterized in that said hot gases feeded to said heat exchanger (17a) for superheating the steam, are gases discharged from a gas turbine (21), and said exchanger (17a) comprises an economizer (22) provided for the same gases.

5. Waste destructor according to claims 1 and 4, characterized in that downstream of said feed heater (16) of the water feeded to the boiler, there is a branch which allows to send water to said boiler, by letting it first pass through said economizer (22) of the heat exchanger (17a).

6. Waste destructor according to claims 1, 4 and 5, characterized in that said gases discharged from the gas turbine (21), from the outlet of said heat exchanger (17a), are possibly partially feeded to said oven of the destructor, as comburent, so as to possibly partially replace said comburent air.
